# EUROPÄISCHE PATENTSCHRIFT

(11) **EP 3 153 891 B1**
(45) Veröffentlichungstag und Bekanntmachung des Hinweises auf die Patenterteilung: **19.07.2023**
(21) Anmeldenummer: 16191018.7
(22) Anmeldetag: 28.09.2016
(51) Int. Cl.: G01V 8/20

(54) **TOR MIT LÄNGENVERÄNDERBAREM ABSTANDSHALTER SOWIE EIN VERFAHREN ZUR MONTAGE DIESES TORES**
GATE WITH LENGTH-ADJUSTABLE SPACER AND METHOD FOR ASSEMBLY OF THIS GATE
PORTE COMPRENANT UN ÉCARTEUR RÉGLABLE EN LONGUEUR ET SON PROCÉDÉ DE MONTAGE

(30) Priorität: 09.10.2015 DE 102015117287
(43) Veröffentlichungstag der Anmeldung: 12.04.2017
(73) Patentinhaber: Novoferm Nederland B.V., 4181 CA Waardenburg (NL)
(72) Erfinder: GODEFRIDUS, joseph Marie Venner, 6086PA Neer (NL)
(74) Vertreter: Kasseck, Christoph

(56) Entgegenhaltungen:
- EP-A1- 2 706 385
- DE-A1-102005 061 555
- DE-A1-102006 009 713
- DE-A1-102010 043 739
- DE-A1-102013 100 311
- US-B1- 6 662 499

## Beschreibung

Die Erfindung betrifft ein Tor, umfassend ein Torblatt und zwei Seitenbegrenzungen, wobei wenigstens eine Seitenbegrenzung eine Lichtgitterleiste aufweist. Weiterhin betrifft die Erfindung ein Verfahren zur Montage dieses Tores. Derartige Tore sind grundsätzlich aus der Praxis bekannt. Die Lichtgitterleiste enthält eine Vielzahl an Infrarot-Lichtschranken, welche ein Lichtgitter bilden. Dieses Lichtgitter liegt in der Verfahrbahn der unteren Kante des Torblattes (Verfahrebene). Hierdurch kann das Tor überwacht und ggf. beispielsweise ein Notstopp ausgelöst werden.

Das Torblatt ist über Verbindungsstege mit Laufrollen verbunden, welche in einer Laufschiene verfahrbar gelagert sind. Demzufolge geben die Laufschiene, die Laufrollen sowie die Verbindungsstege den Verfahrweg der unteren Kante des Torblattes und damit auch die Verfahrebene vor. Folglich muss die Lichtgitterleiste in einem bestimmten Abstand zur Laufschiene an der Seitenbegrenzung befestigt werden, um in der Verfahrebene zu liegen.

Die Überwachung von Toren mittels einer einzelnen Lichtschranke ist seit Längerem bekannt, wie dies aus DE 10 2006 009 713 A1 hervor geht. In EP 2 706 385 A1 ist eine Lichtgitterleiste offenbart, deren Anordnung auf eine präzise und einfache Winkeljustage abzielt. Eine schnell einzustellende Abstandsjustage ist in EP 2 706 385 A1 hingegen nicht beschrieben.

Zu diesem Zwecke sind aus der Praxis und aus DE 10 2013 100 311 A1 Abstandshalter bekannt, welche quaderförmig sind. Diese quaderförmigen Abstandshalter werden zwischen Laufschiene und Lichtgitter eingeklemmt und können um 90° gedreht werden, so dass zwei unterschiedliche Kantenlängen des Abstandshalters drei mögliche Abstände zwischen der Laufschiene und dem Lichtgitter definieren. Der erste Abstand wird durch die größere Kantenlänge, der zweite Abstand durch die kleinere Kantenlänge und der dritte Abstand schließlich über das Fehlen des Abstandshalters definiert.

Allerdings gestaltet sich die Montage der aus der Praxis bekannten Abstandshalter etwas umständlich. Aufgrund der Drehbarkeit benötigt jeder Abstandshalter zwei Bereiche zur Verbindung mit der Laufschiene und zwei Bereiche zur Verbindung mit der Lichtgitterleiste. In der Folge sind die vier Verbindungsbereiche der Abstandshalter in Form von bloßen Anlageflächen verhältnismäßig einfach gestaltet, wodurch der Montageaufwand relativ hoch ist. So muss der bekannte Abstandshalter zwischen der Laufschiene und der Lichtgitterleiste zunächst eingeklemmt werden. Erst danach wird die Lichtgitterleiste an der Seitenbegrenzung befestigt, um gleichzeitig auch den Abstandshalter zu fixieren. Dies bedingt die zunächst lose Anordnung von Abstandshalter und Lichtgitterleiste an der Seitenbegrenzung, was die Handhabung erschwert. Wenn beispielsweise die Lichtstrahlen der Lichtgitterleiste nicht exakt in der Torblattebene liegen, so bedarf es einer Änderung der Strahlrichtung der Lichtgitterleiste. Hierzu muss die Lichtgitterleiste gelöst werden, was dazu führen kann, dass die Abstandshalter verrutschen oder gar auf den Boden fallen. Alternativ können alle vier Verbindungsbereiche aufwändiger gestaltet werden, was sich dann aber in größeren Herstellungskosten niederschlägt.

Der Erfindung liegt daher das technische Problem zugrunde, ein Tor anzugeben, dessen Abstandshalter sich günstig herstellen lässt und gleichzeitig einen sehr geringen Montageaufwand verursacht. Weiterhin liegt der Erfindung das technische Problem zugrunde, ein Verfahren zur Montage eines Tores anzugeben, bei welchem der Aufwand der Montage möglichst gering ist.

Zur Lösung des technischen Problems lehrt die Erfindung ein Tor, umfassend ein Torblatt und zwei Seitenbegrenzungen, wobei wenigstens eine Seitenbegrenzung eine Lichtgitterleiste sowie eine Laufschiene aufweist, wobei mit der Lichtgitterleiste eine Mehrzahl von Abstandshaltern verbunden ist, wobei die Abstandshalter zur Verbindung mit der Lichtgitterleiste einen Verbindungsbereich aufweisen, wobei wenigstens einer der Abstandshalter einen Längenabschnitt umfasst, welcher Längenabschnitt einen Abstand bzw. Abstände zwischen der Lichtgitterleiste und der Laufschiene der Seitenbegrenzung definiert, wobei der Längenabschnitt wenigstens ein Längenänderungselement zur Änderung der Länge des Längenabschnittes aufweist, wobei das Längenänderungselement eine Sollbruchstelle ist.

Der Erfindung liegt die Erkenntnis zugrunde, dass durch den Längenabschnitt mit wenigstens einem Längenänderungselement der Längenabschnitt von dem Verbindungsbereich entkoppelt ist. Dies meint, dass im Falle unterschiedlicher Längen des Längenabschnittes stets derselbe Verbindungsbereich für die Verbindung des Abstandshalters mit der Lichtgitterleiste zuständig ist. In der Folge lassen sich die Abstandshalter deutlich günstiger herstellen. Diese günstigere Herstellbarkeit wiederum ermöglicht Freiräume für komplexer gestaltete Verbindungsbereiche, durch welche sich wiederum der Montageaufwand verringern lässt. Im Ergebnis erfüllt der erfindungsgemäße Abstandshalter die ihm obliegenden Aufgaben der Abstandsdefinition und der Verbindung der Lichtgitterleiste mit der Seitenbegrenzung zielgenauer als derjenige des Standes der Technik.

Der Begriff "Tor" umfasst insbesondere Schnelllaufroll-, Sektional- und Rolltore sowie Industrie- und Garagentore. Der Ausdruck "Seitenbegrenzung" meint sowohl Zargen und/oder eine Wand. Die Zargen können die Wand zur Tormitte hin abschließen oder aber beispielsweise neben der Wandöffnung angeordnet sein. Im ersten Fall liegt die Zarge in der Wandöffnung, im zweiten Fall liegt die Zarge lediglich an der Wand an. Unter dem Begriff "Verfahrebene" wird nachfolgend die Ebene der verfahrenden unteren Kante des Torblattes verstanden. Demgegenüber ist mit dem Ausdruck "Schließebene" diejenige Fläche des Torblattes gemeint, welche von dem Lichtgitter abgewandt ist und wobei sich das Torblatt in geschlossener Position befindet.

Der Begriff "Komponente" meint insbesondere eine Laufschiene, eine Wand, eine Dichtung und/oder eine Zarge. Ganz besonders bevorzugt wird auf die Laufschiene und auf die Dichtung bzw. Zarge bzw. Wand bzw. Schließebene abgestellt. Vorzugsweise umfassen die Seitenbegrenzungen je eine Laufschiene. Es ist vorteilhaft, dass die Lichtgitterleiste von der Tormitte aus gesehen zwischen der Laufschiene und einer Schließebene des Torblattes liegt. Der Längenabschnitt definiert einen Abstand bzw. Abstände zwischen der Lichtgitterleiste und der Laufschiene. Gemäß eines Beispiels, welches nicht Teil der Erfindung darstellt, definiert der Längenabschnitt einen Abstand bzw. Abstände zwischen der Lichtgitterleiste und der Schließebene. Vorzugsweise umfasst eine Mehrzahl von Abstandshaltern je einen Längenabschnitt. Wenigstens einer der Abstandshalter definiert über den jeweiligen Längenabschnitt einen Abstand bzw. Abstände zu der Laufschiene. Gemäß eines Beispiels, welches nicht Teil der Erfindung darstellt, umfassen zweite Abstandshalter je einen Längenabschnitt, welcher Längenabschnitt einen Abstand bzw. Abstände zwischen der Lichtgitterleiste und der Schließebene definieren. Vorzugsweise ist die Lichtgitterleiste und/oder die Laufschiene an der Zarge angeordnet. Die Zarge ist bevorzugt ein Profil und besonders bevorzugt ein L- oder ein U-Profil.

Verlaufen die Komponente und die Lichtgitterleiste zueinander parallel, so liegt lediglich ein Abstand zwischen der Komponente und der Lichtgitterleiste vor.

Schließen jedoch die Komponente und die Lichtgitterleiste einen Winkel zueinander ein, so liegen mehrere Abstände zwischen der Laufschiene und der Lichtgitterleiste vor. Mit "Abstand" ist eine im Wesentlichen waagerechte Entfernung gemeint. Der Ausdruck "Abstandsdefinition" meint, dass sowohl die Komponente als auch die Lichtgitterleiste an dem Abstandshalter anliegen. Vorzugsweise liegen die Komponente und/oder die Lichtgitterleiste unmittelbar an dem Abstandshalter an. In einer anderen Ausführungsform liegen die Komponente und/oder die Lichtgitterleiste mittelbar an dem Abstandshalter an. Der Begriff "mittelbar" bedeutet, dass zwischen der Komponente bzw. der Lichtgitterleiste und dem Abstandshalter wenigstens ein weiteres Element liegt. Dieses weitere Element liegt dann jeweils an der Komponente bzw. der Lichtgitterleiste bzw. dem Abstandshalter an.

Der Ausdruck "Längenänderungselement" bedeutet, dass der Längenabschnitt ohne Werkzeugeinsatz in seiner Länge verändert werden kann. Es ist bevorzugt, dass der Längenabschnitt und das Längenänderungselement derart ausgebildet sind, dass die Längenänderung mittels bloßer Hand und besonders bevorzugt lediglich mittels zwei Fingern möglich ist. Die Längenänderung kann gemäß eines Beispiels, welches nicht Teil der Erfindung ist, reversibel vonstattengehen. Gemäß der Erfindung ist die Längenänderung jedoch irreversibel. Die Längenänderung kann gemäß eines Beispiels, welches nicht Teil der Erfindung ist, ein Verlängern sein. Gemäß der Erfindung ist die Längenänderung jedoch ein Verkürzen. Eine irreversible Verkürzung ist beispielsweise ein bloßes Abreißen von Teilen des Längenänderungselementes. Ein reversibles Verlängern, welches nicht Teil der Erfindung ist, ist beispielsweise ein Einrasten von entsprechend ausgebildeten Rastelementen zur Verlängerung des Längenabschnittes. Vorteilhafterweise sind der Längenabschnitt und das Längenänderungselement derart ausgebildet, dass die definierten Abstände stufenartig vorbestimmt sind.

Das Längenänderungselement ist eine Sollbruchstelle und ist daher ein Verkürzungselement und irreversibel. Der Begriff "Sollbruchstelle" umfasst beispielsweise Einkerbungen zur Vornahme eines Bruches. Der Begriff "Sollbruchstelle" kann aber auch einen Übergangsbereich zwischen einem länglichen und einem massiven Element meinen. Ferner werden unter dem Begriff "Längenänderungselement" sowohl noch benutzbare als auch bereits benutzte Längenänderungselemente verstanden. Wird beispielsweise ein Längenabschnitt an einer bestimmten Sollbruchstelle verkürzt, so weist er nach wie vor eine Sollbruchstelle - und zwar eine benutzte und damit auch nicht mehr benutzbare Sollbruchstelle - auf. Gleiches gilt für den allgemeineren Begriff des Längenänderungselementes. Vorzugsweise sind vom Verbindungsbereich weiter entfernte Längenänderungselemente weniger kraftaufwändig.

Es ist sehr vorteilhaft, dass der Verbindungsbereich derart ausgebildet ist, dass er die Lichtgitterleiste rastend und vorzugsweise gleitrastend aufnehmen kann. Es liegt im Rahmen der Erfindung, dass der Verbindungsbereich die Lichtgitterleiste wenigstens teilweise umgreift. Vorteilhafterweise werden wenigstens drei von vier Seiten der Lichtgitterleiste von dem Verbindungsbereich umgriffen. Es ist zweckmäßig, dass die Lichtgitterleiste wenigstens einen Vorsprung, bevorzugt wenigstens zwei, weiter bevorzugt wenigstens vier Vorsprünge zwecks besserem Umgreifen aufweist.

Gemäß einer bevorzugten Ausführungsform weist der Längenabschnitt wenigstens zwei Längenänderungselemente auf. Weiter bevorzugt weist der Längenabschnitt lediglich zwei Längenänderungselemente auf. Das Längenänderungselement definiert vorzugsweise einen ersten Abstand zwischen 35 und 60 mm und vorzugsweise zwischen 41 und 52 mm. Es ist bevorzugt, dass das Längenänderungselement einen zweiten Abstand zwischen 8 und 26 mm und vorzugsweise zwischen 13 und 23 mm definiert. Es ist weiter bevorzugt, dass der Längenabschnitt einen dritten Abstand zwischen 0,5 und 10 mm und vorzugsweise zwischen 1 und 5 mm definiert. Gemäß einer bevorzugten Ausführungsform umfasst der Längenabschnitt einen Stift. Der Begriff "Stift" meint ein Längenverhältnis von 3:1, vorzugsweise von 5:1, weiter vorzugsweise von 10:1 und ganz besonders von 20:1, wobei hierbei stets das Verhältnis zwischen der längsten Ausdehnung des Stiftes zu dessen Durchmesser bzw. Querschnittskantenlänge herangezogen wird. Es liegt im Rahmen der Erfindung, dass der Längenabschnitt einen Teil des Verbindungsbereiches umfasst. Es ist vorteilhaft, dass der Längenabschnitt an der Seitenbegrenzung anliegt. Zweckmäßigerweise ist der Längenabschnitt senkrecht zur Verfahrebene ausgerichtet. Vorteilhafterweise umfasst der Längenabschnitt eine Anlagefläche zur Anlage an der Laufschiene. Die Anlagefläche ist bevorzugt kleiner als 400 mm², weiter bevorzugt kleiner als 100 mm² und besonders bevorzugt kleiner als 25 mm².

Vorteilhafterweise umfassen die Seitenbegrenzungen je eine Dichtung. Weiter vorteilhafterweise verläuft die Dichtung senkrecht zu einem Fußboden bzw. parallel zu einer Wandkante. Es ist bevorzugt, dass die Dichtung bzw. die Dichtungen in der bzw. unmittelbar an der Schließebene liegen. Es liegt im Rahmen der Erfindung, dass die Lichtgitterleiste und zweckmäßigerweise die Laufschiene an einem ersten Schenkel der Zarge befestigt sind. Die Dichtung kann vorteilhafterweise an einem zweiten Schenkel des Zargenprofils angeordnet sein. Es ist zweckmäßig, dass die Schließebene und die Lichtgitterleiste bzw. Verfahrebene einen Winkel α einschließen, welcher unter 5° und vorzugsweise unter 3° beträgt. Die Lichtgitterleiste liegt idealerweise vollständig in der Verfahrebene. Gemäß einer besonders bevorzugten Ausführungsform definieren die zweiten Abstandshalter mittels unterschiedlich lang ausgebildeter Längenabschnitte und mittels entsprechender Höhenpositionierung den Winkel α. Ganz besonders vorzugsweise wird einer der zweiten Abstandshalter mit vollständigem Längenabschnitt im Bereich des oberen Endes der Lichtgitterleiste befestigt. Weiter vorzugsweise wird einer der zweiten Abstandshalter mit kürzerem Längenabschnitt im Bereich der Mitte der Lichtgitterleiste angeordnet. Ferner wird vorzugsweise einer der zweiten Abstandshalter mit vollständig entferntem Längenabschnitt am unteren Ende der Lichtgitterleiste befestigt. Zweckmäßigerweise wird der oder werden die zweiten Abstandshalter mit kürzer definiertem Abstand bzw. Abständen weiter unten angeordnet. Idealerweise wird der oder werden die zweiten Abstandshalter mit länger definiertem Abstand bzw. Abständen weiter oben befestigt. Die Laufschiene ist bevorzugt parallel zu der Lichtgitterleiste ausgerichtet. Gemäß einer bevorzugten Ausführungsform sind die Lichtgitterleiste und die Laufschiene über die ersten Abstandshalter parallel zueinander ausgerichtet.

Vorteilhafterweise ist wenigstens ein Teil des Abstandshalters aus Kunststoff gebildet. Vorzugsweise ist lediglich ein Teil des Verbindungsbereiches aus Kunststoff. Es ist zweckmäßig, dass der Längenabschnitt Kunststoff aufweist. Bevorzugt sind der Längenabschnitt und der wenigstens eine Teil des Verbindungsbereiches aus Kunststoff und besonders vorzugsweise homogen aus Kunststoff gebildet. Der Begriff "homogen" meint, dass die entsprechenden Elemente gleichzeitig mittels beispielsweise Spritzguss oder Extrusion gebildet werden. Es ist zweckmäßig, dass wenigstens ein erster Teil des Abstandshalters Kunststoff umfasst und ein zweiter Teil des Abstandshalters ein zweites Material aufweist. Gemäß einer besonders bevorzugten Ausführungsform umfasst der Verbindungsbereich das zweite Material. Das zweite Material ist vorteilhafterweise Metall oder ein Polymer.

Gemäß einer besonders bevorzugten Ausführungsform umfasst der Abstandshalter ein Befestigungsmittel zur unmittelbaren Befestigung des Abstandshalters an der Seitenbegrenzung. Vorzugsweise ist das Befestigungsmittel eine Ausnehmung, weiter vorzugsweise Bohrung und besonders bevorzugt eine Senkbohrung für eine Schraube. Das Befestigungsmittel ist zweckmäßigerweise in einem an der Seitenbegrenzung anliegenden Boden angeordnet. Vorzugsweise ist der Boden ein flächig ausgebildeter Boden.

Gemäß einer besonders bevorzugten Ausführungsform umfasst der Verbindungsbereich ein Federelement. Vorzugsweise ist das Federelement eine Blattfeder. Es ist zweckmäßig, dass das Federelement das zweite Material enthält. Vorzugsweise umfasst das Federelement Metall oder ein Polymer. Es ist bevorzugt, dass lediglich das Federelement das zweite Material aufweist. Vorteilhafterweise ermöglicht das Federelement eine Rastung und weiter vorteilhafterweise eine Gleitrastung. Es liegt im Rahmen der Erfindung, dass das Federelement eine Einführungsfahne aufweist. Bevorzugt ist das Federelement das Teil des Abstandshalters, welches nicht aus Kunststoff besteht. Zweckmäßigerweise liegt das Federelement an einer Seite der Lichtgitterleiste an. Es ist zweckmäßig, dass das Federelement eine Kante der Lichtgitterleiste umgreift. Gemäß einer besonders bevorzugten Ausführungsform ist das Federelement in den Boden einsteckbar. Vorzugsweise weist das Federelement einen Widerhaken an einem einsteckbaren Abschnitt des Federelementes auf. Zweckmäßigerweise umfasst der Boden eine Aufnahme, in welche der Widerhaken einsteckbar und vorteilhafterweise einrastbar ist.

Es liegt im Rahmen der Erfindung, dass der Verbindungsbereich einen Haltearm zum Halten der Lichtgitterleiste umfasst. Vorzugsweise hält der Haltearm die Lichtgitterleiste mittels Formschluss. Der Haltearm ist bevorzugt homogen mit dem Längenabschnitt ausgebildet. Weiter vorzugsweise ist der Haltearm homogen mit dem Boden ausgebildet. Vorzugsweise sind der Haltearm und/oder der Längenabschnitt und/oder der Boden aus Kunststoff. Es liegt im Rahmen der Erfindung, dass der Haltearm und der Boden im Querschnitt L-förmige sind. Idealerweise erstreckt sich der Haltearm parallel zur Verfahrebene. Das Federelement, der Boden und der Haltearm bilden bevorzugt zusammen eine U-Form. Vorzugsweise bildet das Federelement einen ersten U-Schenkel, vorteilhafterweise bildet der Haltearm einen zweiten U-Schenkel und besonders vorzugsweise bildet der Boden den U-Steg zwischen den beiden U-Schenkeln. Es ist zweckmäßig, dass der Haltearm einen Teil des Längenabschnittes bildet. Zweckmäßigerweise bildet der Längenabschnitt eine Verlängerung des Bodens.

Die Erfindung lehrt zur Lösung des technischen Problems ein Verfahren zur Montage eines Tores, wobei das Tor ein Torblatt und zwei Seitenbegrenzungen aufweist, wobei wenigstens eine Seitenbegrenzung eine Lichtgitterleiste sowie eine Laufschiene aufweist, wobei mit der Lichtgitterleiste eine Mehrzahl von Abstandshaltern verbunden ist, wobei die Abstandshalter zur Verbindung mit der Lichtgitterleiste einen Verbindungsbereich aufweisen, wobei wenigstens einer der Abstandshalter einen Längenabschnitt umfasst, welcher Längenabschnitt einen Abstand bzw. Abstände zwischen der Lichtgitterleiste und der Laufschiene der Seitenbegrenzung definiert, wobei der Längenabschnitt wenigstens ein Längenänderungselement zur Änderung der Länge des Längenabschnittes aufweist, wobei das Längenänderungselement eine Sollbruchstelle ist, wobei zunächst die Mehrzahl an Abstandshaltern an der wenigstens einen Seitenbegrenzung befestigt wird, wobei dann die Lichtgitterleiste an den Abstandshaltern befestigt wird.

Vorzugsweise wird die Längenänderung vorgenommen, bevor die Abstandshalter an der Seitenbegrenzung befestigt werden. Gemäß einer besonders bevorzugten Ausführungsform wird vorbestimmt, welcher Längenabschnitt auf welcher Höhe der Lichtgitterleiste anzuordnen ist. Nachfolgend wird die Erfindung anhand einer ein Ausführungsbeispiel darstellenden Zeichnung näher erläutert. Es zeigen in schematischer Darstellung:
- Fig. 1a: einen Querschnitt A-A einer Seitenbegrenzung eines erfindungsgemäßen Tores
- Fig. 1b: eine nicht maßstabsgetreue Vorderansicht der Seitenbegrenzung aus Fig. 1a, wobei der Blick von der Mitte des Tores auf die Seitenbegrenzung fällt,
- Fig. 2: eine perspektivische Ansicht eines erfindungsgemäßen Abstandshalters der Seitenbegrenzung aus Fig. 1,
- Fig. 3: eine perspektivische Ansicht eines erfindungsgemäßen Federelementes des Abstandshalters aus Fig. 2 und
- Fig. 4: eine Seitenansicht des Abstandshalters aus Fig. 2, wobei der Abstandshalter teilweise im Querschnitt dargestellt ist und wobei zusätzlich noch eine erfindungsgemäße Lichtgitterleiste und ein Schraubenschaft abgebildet sind.

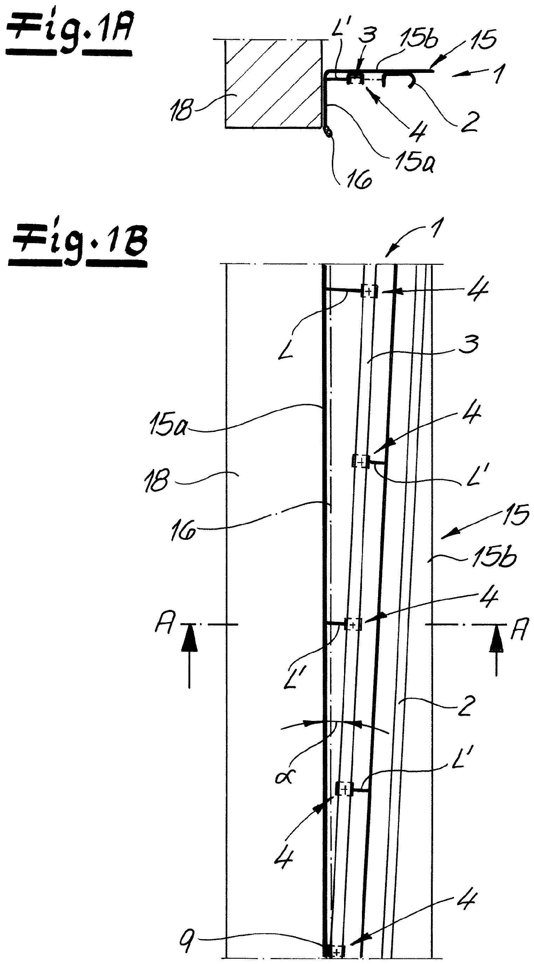

Fig. 1a zeigt einen Querschnitt einer Seitenbegrenzung 1, welche eine Wand 18 sowie eine Zarge 15 aufweist. Nach unten folgt auf die Wand 18 eine Wandöffnung, welche es durch das erfindungsgemäße Tor zu verschließen gilt. Die Zarge 15 weist ein L-förmiges Blechprofil mit zwei Schenkeln 15a, 15b auf, wobei der kürzere Schenkel 15a an der Wand 18 befestigt ist. An dem kürzeren Schenkel 15a ist eine Dichtung 16 angeordnet, welche sich in der Nähe zu einer Wandkante befindet und parallel zu dieser ausgerichtet ist. Auf der der Tormitte zugewandten Seite des Schenkels 15b sind eine Laufschiene 2 und eine Lichtgitterleiste 3 angeordnet. Die Laufschiene 2 weist ein J-förmiges Profil auf.

In Fig. 1b ist die Seitenbegrenzung aus Fig. 1a in einer Vorderansicht dargestellt, wobei der Blick von der Mitte des Tores auf die Seitenbegrenzung 1 fällt. Es ist zu erkennen, dass die Laufschiene 2 und die Lichtgitterleiste 3 parallel zueinander angeordnet sind. Darüber hinaus sind die Laufschiene 2 und die Lichtgitterleiste 3 leicht schräg zur Dichtung 16, zur Wand 18 und zur Zarge 15 angeordnet und schließen so einen Winkel α ein. Zwei erste Abstandshalter 4 definieren über einen Längenabschnitt L', 9 den Abstand zwischen Lichtgitterleiste 3 und Laufschiene 2. Drei zweite Abstandshalter 4 definieren mit den jeweiligen Längenabschnitten L, L`, 9 Abstände zu dem Schenkel 15a und damit auch zur Dichtung 16 bzw. zur Schließebene.

Das nicht dargestellte Torblatt wird über ebenfalls nicht dargestellte Laufrollen in der Laufschiene 2 geführt. Dabei werden über waagerechte Verbindungsstege die Abstände zwischen den Laufrollen im Torblatt nach oben hin immer größer, wodurch der Winkel α zwischen der Laufschiene 2 und dem Torblatt erzeugt wird. Die schräge Anordnung der Laufschiene 2 führt dazu, dass das von oben einfahrende Torblatt aufgrund der zuerst einfahrenden unteren Laufrolle mit kürzerem Verbindungssteg zunächst keinerlei Kontakt mit der Dichtung 16 hat. Je weiter das Torblatt nach unten fährt, desto geringer wird jedoch der Abstand zwischen dem Torblatt und der Dichtung 16, bis das Torblatt sich in der untersten Position und damit in der Schließebene befindet und nun schlagartig entlang der gesamten Dichtung 16 anliegt. Hierdurch wird das Tor gut abgedichtet. Ohne diese schräge Anordnung dürfte nur eine deutlich geringere Kraft vom Torblatt auf die Dichtung 16 einwirken. Denn die Dichtung 16 würde andernfalls entlang ihrer gesamten Ausdehnung einer größeren Reibung durch das Torblatt ausgesetzt, die die Dichtung im Falle größerer Kräfte (und nur anfangs größerer Dichtwirkung) auf Dauer beschädigen würde. Die Lichtgitterleiste 3 ist hingegen parallel zu der Laufschiene 2 ausgerichtet, da der durch den untersten Verbindungssteg definierte Abstand zwischen unterer Torblattkante und der Laufschiene 2 stets konstant ist.

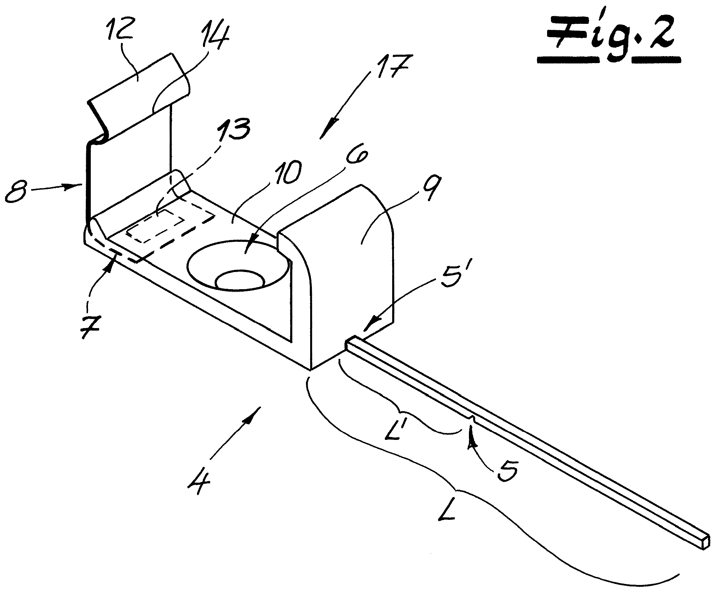

In Fig. 2 ist der erfindungsgemäße Abstandshalter 4 perspektivisch dargestellt. Der Abstandshalter umfasst neben dem Längenabschnitt L, L`, 9 einen Verbindungsbereich 17. Der Verbindungsbereich 17 weist einen Boden 10 auf, in welchem sich ein Befestigungsmittel 6 in Form einer konischen Senkbohrung zur unmittelbaren Befestigung des Abstandshalters 4 an der Seitenbegrenzung 1 befindet. Der Boden 10 liegt somit flächig an der Seitenbegrenzung 1 an. An den Boden 10 schließt im rechten Winkel ein Haltearm 9 des Verbindungsbereiches 17 an, so dass der Boden 10 und der Haltearm 9 zusammen einen L-förmigen Querschnitt aufweisen. Der Haltearm 9 ist im oberen Bereich nach innen gebogen, so dass er die hier nicht dargestellte Lichtgitterleiste 3 formschlüssig umgreifen kann. Der Haltearm 9 bildet einen Teil des Längenabschnittes L, L', 9. Der zweite Schenkel des im Querschnitt U-förmigen Verbindungsbereiches 17 wird von einem Federelement 8 gebildet und wird nachfolgend noch etwas genauer beschrieben.

In Verlängerung des Bodens 10 ist der Längenabschnitt L, L', 9 angeordnet. Ein Teil L, L` des Längenabschnittes L, L`, 9 ist stiftförmig und weist einen etwa quadratischen Querschnitt auf. Die Querschnittskantenlänge beträgt 1 mm, wobei die längste Ausdehnung des Längenabschnitts L, 9 46,5 mm beträgt. Der Längenabschnitt L, 9 kann mittels des Längenänderungselementes 5 in Form einer Sollbruchstelle in Form einer Einkerbung irreversibel zu einem kürzeren Längenabschnitt L', 9 verkürzt werden. Der Längenabschnitt L`, 9 weist eine Länge von 18 mm auf. Ferner kann der kürzere Längenabschnitt L', 9 mittels des Längenänderungselementes 5' in Form einer Sollbruchstelle ohne Einkerbung auf den Längenabschnitt 9 mit 2,5 mm verkürzt werden. Demzufolge erlaubt der Abstandshalter 4 die Definition von drei Abständen.

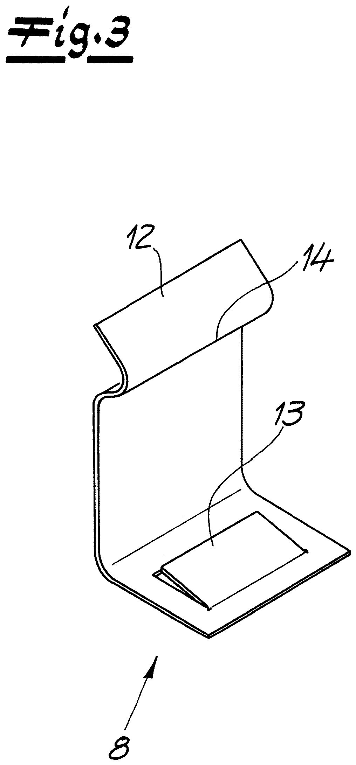

In Fig. 3 ist das bereits erwähnte Federelement 8 in perspektivischer und weiter vergrößerter Darstellung gezeigt. Das Federelement 8 ist eine Blattfeder aus Metall, welche an ihrem oberen Ende eine Einführungsfahne 12 aufweist. Die Einführungsfahne 12 ist schräg nach außen geneigt, wodurch die Lichtgitterleiste 3 derart von oben auf die Abstandshalter 4 gedrückt werden kann, dass der zweite Schenkel des Abstandshalters 4 in Form des Federelementes 8 leicht nach außen nachgibt. Hierdurch gleitet die Lichtgitterleiste an einer nach innen vorspringenden Kante 14 vorbei. Sobald sich die Lichtgitterleiste 3 unterhalb der Kante 14 befindet, setzt die Rückstellkraft des Federelementes 8 ein und umschließt formschlüssig die Lichtgitterleiste 3. Die Einführungsfahne 12 und die nach innen vorspringende Kante 14 erlauben somit eine für Montagezwecke besonders vorteilhafte Gleitrastung. Das Federelement 8 weist zudem einen nach innen gebogenen Fuß auf, welcher einen federnd gelagerten Widerhaken 13 umfasst.

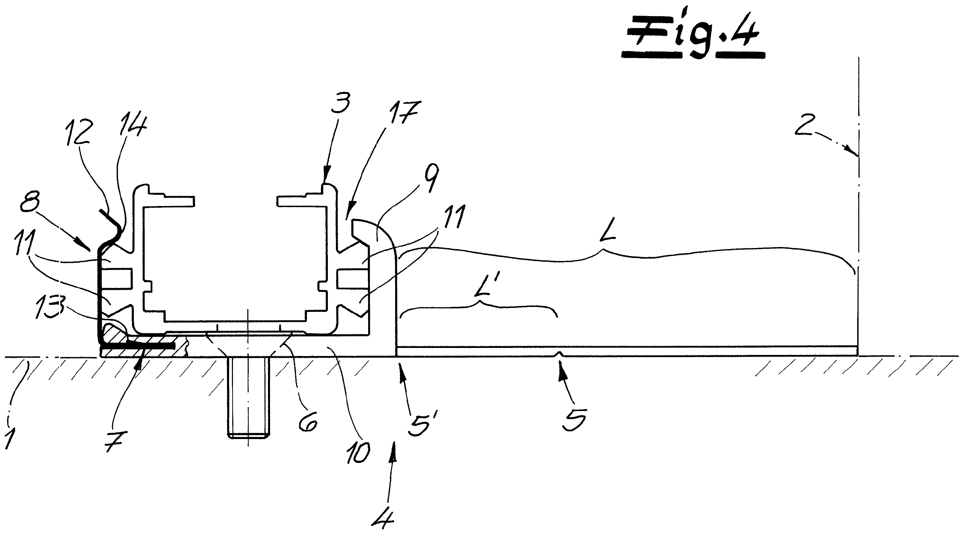

Fig. 4 schließlich zeigt eine seitliche Darstellung des Abstandshalters 4 mitsamt Lichtgitterleiste 3 bzw. eine teilweise Querschnittsdarstellung dieser beiden Elemente 3, 4. So weist die Lichtgitterleiste 3 ein Gehäuseprofil auf, welches mit nach außen ragenden Vorsprüngen 11 auf beiden Seiten versehen ist. Dabei dienen die beiden oberen Vorsprünge 11 der Aufgabe des Formschlusses mit dem Federelement 8 bzw. dem Haltearm 9. Die beiden unteren Vorsprünge 11 bezwecken im Wesentlichen die Stabilisierung der Lichtgitterleiste 3 innerhalb des Abstandshalters 4. Mit Blick auf die Querschnittsdarstellung in Fig. 4 ist erkennbar, dass der Boden 10 eine Aufnahme 7 für den darin einrastenden Widerhaken 13 des Federelementes 8 aufweist. Hierdurch wird das Federelement 8 zuverlässig an dem Abstandshalter 4 befestigt. Schließlich ist in Fig. 4 noch eine M4x15-Schraube zur Befestigung des Abstandshalters 4 mit der Seitenbegrenzung 1 dargestellt, welche durch das Befestigungsmittel 6 in Form einer Senkbohrung geführt ist.

## Patentansprüche

1. Tor, umfassend ein Torblatt und zwei Seitenbegrenzungen (1), wobei mindestens eine Seitenbegrenzung (1) eine Lichtgitterleiste (3) sowie eine Laufschiene (2) aufweist, wobei mit der Lichtgitterleiste (3) eine Mehrzahl von Abstandshaltern (4) verbunden ist, wobei die Abstandshalter (4) zur Verbindung mit der Lichtgitterleiste (3) einen Verbindungsbereich (17) aufweisen, wobei wenigstens einer der Abstandshalter (4) einen Längenabschnitt (L, L`, 9) umfasst, welcher Längenabschnitt (L, L`, 9) einen Abstand bzw. Abstände zwischen der Lichtgitterleiste (3) und der Laufschiene (2) der Seitenbegrenzung (1) definiert,
**dadurch gekennzeichnet, dass**
der Längenabschnitt (L, L', 9) wenigstens ein Längenänderungselement (5, 5') zur Änderung der Länge des Längenabschnittes (L, L', 9) aufweist, wobei das Längenänderungselement (5, 5') eine Sollbruchstelle ist.

2. Tor nach Anspruch 1, wobei der Verbindungsbereich (17) derart ausgebildet ist, dass er die Lichtgitterleiste (3) rastend aufnehmen kann.

3. Tor nach einem der Ansprüche 1 oder 2, wobei die Seitenbegrenzungen (1) je eine Dichtung (16) umfassen.

4. Tor nach einem der Ansprüche 1 bis 3, wobei wenigstens ein erster Teil des Abstandshalters (4) Kunststoff umfasst und wobei wenigstens ein zweiter Teil des Abstandshalters (4) ein zweites Material aufweist.

5. Tor nach einem der Ansprüche 1 bis 4, wobei der Abstandshalter (4) ein Befestigungsmittel (6) zur unmittelbaren Befestigung des Abstandshalters (4) an der Seitenbegrenzung (1) umfasst.

6. Tor nach einem der Ansprüche 1 bis 5, wobei der Verbindungsbereich (17) ein Federelement (8) aufweist.

7. Tor nach einem der Ansprüche 1 bis 6, wobei der Verbindungsbereich (17) einen Haltearm (9) zum Halten der Lichtgitterleiste (3) umfasst.

8. Verfahren zur Montage eines Tores, wobei das Tor ein Torblatt und zwei Seitenbegrenzungen (1) aufweist, wobei mindestens eine Seitenbegrenzung (1) eine Lichtgitterleiste (3) sowie eine Laufschiene (2) aufweist, wobei mit der Lichtgitterleiste (3) eine Mehrzahl von Abstandshaltern (4) verbunden ist, wobei die Abstandshalter (4) zur Verbindung mit der Lichtgitterleiste (3) einen Verbindungsbereich (17) aufweisen, wobei wenigstens einer der Abstandshalter (4) einen Längenabschnitt (L, L', 9) umfasst, welcher Längenabschnitt (L, L`, 9) einen Abstand bzw. Abstände zwischen der Lichtgitterleiste (3) und der Laufschiene (2) der Seitenbegrenzung (1) definiert, wobei der Längenabschnitt (L, L', 9) wenigstens ein Längenänderungselement (5, 5') zur Änderung der Länge des Längenabschnittes (L, L`, 9) aufweist, wobei das Längenänderungselement (5, 5') eine Sollbruchstelle ist,
wobei zunächst die Mehrzahl von Abstandshaltern (4) an der wenigstens einen Seitenbegrenzung (1) befestigt wird und dann die Lichtgitterleiste (3) an den Abstandshaltern (4) befestigt wird.

## Claims

1. A door, comprising a door leaf and two side borders (1), wherein at least one side border (1) comprises a light grid strip (3) and a runner rail (2), wherein a plurality of spacers (4) is connected to the light grid strip (3), wherein the spacers (4) comprise a connection region (17) for the connection with the light grid strip (3), wherein at least one of the spacers (4) comprises a length section (L, L', 9), which length section (L, L', 9) defines a distance or distances between the light grid strip (3) and the runner rail (2) of the side border (1),
**characterised in that**
the length section (L, L', 9) comprises at least one length-changing element (5, 5') for changing the length of the length section (L, L', 9), wherein the length-changing element (5, 5') is a predetermined breaking point.

2. The door according to claim 1, wherein the connection region (17) is constituted in such a way that it can accommodate the light grid strip (3) in a latching manner.

3. The door according to any one of claims 1 or 2, wherein the side borders (1) each comprise a seal (16).

4. The door according to any one of claims 1 to 3, wherein at least a first part of the spacer (4) comprises plastic and wherein a second part of the spacer (4) comprises a second material.

5. The door according to any one of claims 1 to 4, wherein the spacer (4) comprises a fastening means (6) for the indirect fastening of spacer (4) to the side border (1).

6. The door according to any one of claims 1 to 5, wherein the connection region (17) comprises a spring element (8) .

7. The door according to any one of claims 1 to 6, wherein the connection region (17) comprises a holding arm (9) for holding the light grid strip (3).

8. A method for the assembly of a door, wherein the door comprises a door leaf and two side borders (1), wherein at least one side border (1) comprises a light grid strip (3) and a runner rail (2), wherein a plurality of spacers (4) is connected to the light grid strip (3), wherein the spacers (4) comprise a connection region (17) for the connection to the light grid strip (3), wherein at least one of the spacers (4) comprises a length section (L, L', 9), which length section (L, L', 9) defines a distance or distances between the light grid strip (3) and the runner rail (2) of the side border (1), wherein the length section (L, L', 9) comprises at least one length-changing element (5, 5') for changing the length of the length section (L, L', 9), wherein the length-changing element (5, 5') is a predetermined breaking point,
wherein the plurality of spacers (4) is first fastened to the at least one side border (1) and then the light grid strip (3) is fastened to the spacers (4).

## Revendications

1. Porte, comportant un battant de porte et deux délimitations latérales (1), dans laquelle au moins une délimitation latérale (1) présente une baguette de barrière lumineuse (3) ainsi qu'un rail de roulement (2), dans laquelle une pluralité d'espaceurs (4) sont reliés à la baguette de barrière lumineuse (3), dans laquelle les espaceurs (4) présentent un région d'assemblage (17) pour l'assemblage avec la baguette de barrière lumineuse (3), dans laquelle l'un au moins des espaceurs (4) comporte une section longitudinale (L, L', 9), ladite section longitudinale (L, L', 9) définissant un espace ou des espaces entre la baguette de barrière lumineuse (3) et le rail de roulement (2) de la délimitation latérale (1),
**caractérisée en ce que**
la section longitudinale (L, L', 9) présente au moins un élément de modification de longueur (5, 5') permettant de modifier la longueur de la section longitudinale (L, L', 9), dans laquelle l'élément de modification de longueur (5, 5') est une zone de rupture théorique.

2. Porte selon la revendication 1, dans laquelle la région d'assemblage (17) est conçue de manière à pouvoir recevoir la baguette de barrière lumineuse (3) par encliquetage.

3. Porte selon l'une des revendications 1 ou 2, dans laquelle les délimitations latérales (1) comportent respectivement un joint d'étanchéité (16).

4. Porte selon l'une des revendications 1 à 3, dans laquelle au moins une première partie de l'espaceurs (4) comporte du plastique et dans laquelle au moins une deuxième partie de l'espaceurs (4) présente un deuxième matériau.

5. Porte selon l'une des revendications 1 à 4, dans laquelle l'espaceurs (4) comporte un moyen de fixation (6) permettant de fixer directement l'espaceurs (4) à la délimitation latérale (1).

6. Porte selon l'une des revendications 1 à 5, dans laquelle la région d'assemblage (17) présente un élément de ressort (8).

7. Porte selon l'une des revendications 1 à 6, dans laquelle la région d'assemblage (17) comporte un bras de maintien (9) permettant de maintenir la baguette de barrière lumineuse (3).

8. Procédé pour le montage d'une porte, dans lequel la porte présente un battant de porte et deux délimitations latérales (1), dans lequel au moins une délimitation latérale (1) présente une baguette de barrière lumineuse (3) ainsi qu'un rail de roulement (2), dans lequel une pluralité d'espaceurs (4) sont reliés à la baguette de barrière lumineuse (3), dans lequel les espaceurs (4) présentent un région d'assemblage (17) pour l'assemblage avec la baguette de barrière lumineuse (3), dans lequel l'un au moins des espaceurs (4) comporte une section longitudinale (L, L', 9), ladite section longitudinale (L, L', 9) définissant un espace ou des espaces entre la baguette de barrière lumineuse (3) et le rail de roulement (2) de la délimitation latérale (1), dans lequel la section longitudinale (L, L', 9) présente au moins un élément de modification de longueur (5, 5') permettant de modifier la longueur de la section longitudinale (L, L', 9), dans lequel l'élément de modification de longueur (5, 5') est une zone de rupture théorique,
dans lequel la pluralité d'espaceurs (4) sont tout d'abord fixés à l'au moins une délimitation latérale (1) et puis la baguette de barrière lumineuse (3) est fixée aux espaceurs (4).
